# EUROPÄISCHE PATENTSCHRIFT

(11) **EP 3 026 307 B1**
(45) Veröffentlichungstag und Bekanntmachung des Hinweises auf die Patenterteilung: **15.03.2017**
(21) Anmeldenummer: 15188869.0
(22) Anmeldetag: 08.10.2015
(51) Int. Cl.: F16K 11/074

(54) **VENTILEINHEIT**
VALVE UNIT
UNITE DE SOUPAPE

(30) Priorität: 20.11.2014 DE 102014017089
(43) Veröffentlichungstag der Anmeldung: 01.06.2016
(73) Patentinhaber: Murrplastik Produktionstechnik GmbH, 71570 Oppenweiler (DE)
(72) Erfinder:
(74) Vertreter: Patentanwälte Bregenzer und Reule Partnerschaftsgesellschaft mbB

(56) Entgegenhaltungen:
- US-A- 4 399 838
- US-A- 4 930 540

## Beschreibung

Die Erfindung betrifft eine Ventileinheit gemäß Oberbegriff des Anspruchs 1.

Eine solche Ventileinheit ist beispielsweise aus der US4930540 bekannt. Das in DE 102008029706 A1 beschriebene Scheibenventil weist eine Eingangsöffnung und zwei Ausgangsöffnungen auf, wobei die beiden Ausgangsöffnungen jeweils durch eine Absperrscheibe verschließbar sind. Dieses Ventil dient dazu, einen Wärmeträger von einer Wärmequelle auf zwei Heizkreisläufe zu verteilen. Der Wärmeträger, beispielsweise durch die Abwärme eines Motors aufgeheiztes Wasser, wird über die Eingangsöffnung in das Ventil geleitet und wahlweise aus der einen oder der anderen oder beiden Ausgangsöffnungen aus dem Gehäuse ausgeleitet. Dabei ist die Bauweise mit zwei Absperrscheiben aufwendig. Zudem besteht keine Möglichkeit, das Ventil in einer weiteren Betriebsart zu betreiben, bei der Flüssigkeit von der einen zur anderen Ausgangsöffnung geleitet wird, während die Eingangsöffnung gesperrt ist.

Es ist daher Aufgabe der Erfindung, eine Ventileinheit der eingangs genannten Art derart weiterzubilden, dass sie anders betrieben werden kann.

Diese Aufgabe wird erfindungsgemäß durch eine Ventileinheit mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, mittels einer einzigen Absperrscheibe alle drei Ein-/Auslassöffnungen sperren zu können. Dabei kann die Absperrscheibe insbesondere drei Schaltstellungen einnehmen, wobei in jeder Schaltstellung zwei Ein-/Auslassöffnungen miteinander verbunden sind, während die dritte gesperrt ist. Zu diesem Zweck weist die Absperrscheibe zwei Platten auf, die starr miteinander verbunden und im Abstand zueinander angeordnet sind, Zwischen die beiden Platten kann ein flüssiger Wärmeträger einströmen, so dass es durch Verschließen bzw. Freigeben ausgewählter Ein-/Auslassöffnungen zu der als Auslassöffnung eingewählten Ein-/Auslassöffnung geleitet werden kann.

Zweckmäßig sind alle Ein-/Auslassöffnungen gleich groß und vorzugsweise jeweils kreisrund. Dies erleichtert die Fertigung sowie das Anschließen von Standardleitungen, die in der Regel ebenfalls einen kreisrunden Querschnitt haben. Desweiteren wird bevorzugt, dass die zweite Ein-/Auslassöffnung direkt unter der ersten Ein-/Auslassöffnung angeordnet ist, so dass diese beiden Ein-/Auslassöffnungen die Grund- und die Deckfläche eines fiktiven geraden Zylinders aufspannen. Dies ermöglicht in einer Schaltstellung der Absperrscheibe einen geraden Durchtritt des Wärmeträgers, so dass in diesem Fall der Strömungswiderstand sehr gering ist.

Es ist möglich, dass die Absperrscheibe jeweils zwei erste und dritte Durchtrittsöffnungen aufweist, die dann vorzugsweise etwa so groß sind wie die Ein-/Auslassöffnungen. Es wird jedoch bevorzugt, dass genau eine erste und/oder genau eine dritte Durchtrittsöffnung vorhanden ist. Die erste und/oder die dritte Durchtrittsöffnung weist bzw. weisen in der Bewegungsrichtung dann jeweils eine größere Längserstreckung auf als die zweite und die dritte Ein-/Auslassöffnung. Dies ermöglicht es, die erste und die dritte Durchtrittsöffnung in unterschiedlichen Schaltstellungen der Absperrscheibe kommunizierend mit der zweiten bzw. der dritten Ein-/Auslassöffnung anzuordnen. Dabei wird bevorzugt, dass die dritte Durchtrittsöffnung in der Bewegungsrichtung gemessen eine Längserstreckung aufweist, die mindestens dem in der Bewegungsrichtung gemessenen maximalen Abstand der Umfängsränder der zweiten und dritten Ein-/Auslassöffnung entspricht, so dass eine Verbindung zwischen der zweiten und der dritten Ein-/Auslassöffnung hergestellt werden kann, indem der flüssige Wärmeträger von einer dieser Ein-/Auslassöffnungen über die dritte Durchtrittsöffnung in den Raum zwischen den Platten eintritt und ebenso über die dritte Durchtrittsöffnung wieder durch die andere der beiden Ein-/Auslassöffnungen austritt.

Zweckmäßig sind die erste und die dritte Stellung der Absperrscheibe Endstellungen, zwischen denen die Absperrscheibe im Ventilgehäuse hin- und herbeweglich ist. Die zweite Stellung ist dann eine Zwischenstellung zwischen der ersten und der dritten Stellung. Indem die Absperrscheibe nicht über die erste und die dritte Stellung hinaus bewegt werden kann, kann das Ventilgehäuse zur Einsparung von Bauraum entsprechend klein gehalten werden.

Es ist denkbar, dass die Absperrscheibe im Ventilgehäuse linear beweglich gelagert ist, so dass sie durch lineares Verschieben zwischen den Schaltstellungen bewegt werden kann. Es wird jedoch bevorzugt, dass die Absperrscheibe um eine zur ersten Platte und zur zweiten Platte senkrechte Drehachse im Ventilgehäuse verdrehbar gelagert ist.

Zweckmäßig ist das Ventilgehäuse nach allen Seiten geschlossen. Die Absperrscheibe muss dann nicht ringsum mit die Platten miteinander verbindenden Seitenwänden versehen sein, sondern es darf der Wärmeträger aus ihr austreten, das dann im Inneren des Ventilgehäuses verbleibt.

Die erfindungsgemäße Ventileinheit ist vorzugsweise für ein Kreislaufsystem für zum Kühlen einer Wärmequelle bestimmtem Kühlmedium bestimmt, beispielsweise für den Kühlkreislauf eines Verbrennungsmotors in einem Kraftfahrzeug. Das Kühlwasser eines Fahrzeugmotors oder ein von ihm aufgewärmter anderer Wärmeträger wird üblicherweise durch einen Wärmetauscher geleitet, so dass der Fahrzeuginnenraum durch die Abwärme des Motors beheizt werden kann. Eine Heizung ist aber nur dann möglich, wenn das Kühlwasser bereits erwärmt ist. Viele Fahrzeuge sind deshalb mit Zusatzheizungen ausgestattet, auch Standheizungen genannt, die bei kaltem Motor das Kühlwasser oder den anderen Wärmeträger wärmen und so den Fahrzeuginnenraum unter Nutzung des Wärmetauschers heizen. Um die Heizwirkung auf den Fahrzeuginnenraum zu konzentrieren und nicht den kalten Motor mitzuheizen, ist erfindungsgemäß ein Bypass vorgesehen, über den vom Motor kommender Wärmeträger an der Standheizung und dem Wärmetauscher vorbeigeleitet werden kann. Ebenso kann von der Standheizung kommender Wärmeträger am Motor vorbeigeleitet werden. Die erfindungsgemäße Ventileinheit ist dann als 3/3-Wegeventil an der Stelle angeordnet, an der der Bypass von der Kühlwasserleitung abzweigt. Insbesondere wird bevorzugt, dass die Ventileinheit in der ersten Stellung der Absperrscheibe, die einen geraden Durchtritt des Wärmeträgers durch die Ventileinheit ermöglicht, eine Verbindung zwischen dem Bypass und dem Leitungsabschnitt freigibt, in dem die Zusatzheizung und der Wärmetauscher angeordnet sind, während es eine Verbindung zu einem vom Motor kommenden bzw. zum Motor führenden Leitungsabschnitt verschließt.

Im Folgenden wird die Erfindung anhand eines in der Zeichnung schematisch dargestellten Ausführungsbeispiels näher erläutert. Es zeigen
- Figur 1a, 1b: eine Ventileinheit in perspektivischen Ansichten von schräg oben und schräg unten mit gestrichelt dargestelltem Ventilgehäuse;
- Fig. 2a, 2b, 2c: die Ventileinheit gemäß Fig. 1a, 1b in einer Ansicht von unten sowie Schnittdarstellungen entlang der Linien C-C und D-D;

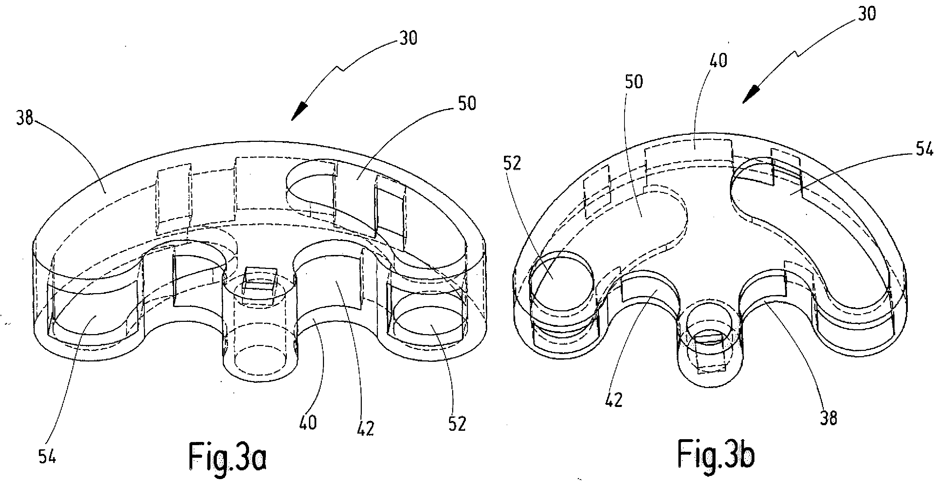

- Fig. 3a, 3b: die Absperrscheibe der Ventileinheit gemäß Fig. 1a, 1b in einer Darstellung von schräg oben und von schräg unten und
- Fig. 4a, 4b, 4c: einen Kreislauf für einen flüssigen Wärmeträger mit der Ventileinheit gemäß Fig. 1a, 1b in drei verschiedenen Schaltstellungen.

Die in der Zeichnung dargestellte Ventileinheit 10 weist ein Ventilgehäuse 12 mit einer Deckenwand 14, einer im Abstand von der Deckenwand 14 parallel zu dieser verlaufenden Bodenwand 16 und die Deckenwand 14 mit der Bodenwand 16 verbindenden Seitenwänden 18 auf. Das Ventilgehäuse 12 umschließt einen Innenraum 20 flüssigkeitsdicht und weist eine erste Ein-/Auslassöffnung 22 in der Deckenwand 14 sowie eine zweite und eine dritte Ein-/Auslassöffnung 24, 26 in der Bodenwand 16 auf, in die jeweils ein senkrecht von der jeweiligen Wand 14, 16 abstehender Anschlussstutzen 28 mündet. Alle Ein-/Auslassöffnungen 22, 24, 26 sind gleich groß und kreisrund ausgebildet.

Im Ventilgehäuse 12 ist eine Absperrscheibe 30 um eine Drehachse 32 verdrehbar in einem Lager 34 gelagert. Aus der Deckenwand 14 ragt eine Antriebswelle 36, an der zum Verdrehen der Absperrscheibe 30 angegriffen werden kann. Die Absperrscheibe 30 weist eine erste Platte 38 sowie eine starr mit der ersten Platte 38 verbundene, im Abstand parallel zu dieser angeordnete zweite Platte 40 auf, wobei zwischen den Platten 38, 40 ein zu den Seiten weitgehend offener Hohlraum 42 angeordnet ist. Die erste Platte 38 liegt an einem um die erste Ein-/Auslassöffnung 22 verlaufenden ersten Dichtring 44 an und wird beim Drehen der Absperrscheibe 30 am ersten Dichtring 44 entlang bewegt. Die zweite Platte 40 liegt an einem um die zweite Ein-/Auslassöffnung 24 umlaufenden zweiten Dichtring 46 sowie an einem um die dritte Ein-/Auslassöffnung 26 umlaufenden dritten Dichtring 48 an. In der ersten Platte 38 ist eine erste Durchtrittsöffnung 50 angeordnet, durch die, wenn sie mit der ersten Ein-/Auslassöffnung 22 kommunizierend angeordnet ist, Flüssigkeit in den Hohlraum 42 ein- bzw. aus diesem ausgeleitet werden kann. Die zweite Platte 40 weist eine zweite Durchtrittsöffnung 52 sowie eine im Abstand zu dieser angeordnete dritte Durchtrittsöffnung 54 auf.

Die zweite Durchtrittsöffnung 52 ist kreisrund ausgebildet und etwa so groß wie die zweite Ein-/Auslassöffnung 24. Die erste und die dritte Durchtrittsöffnung 50, 54 dagegen sind größer und weisen die Form eines gebogenen Langlochs auf, dessen Mittellinie auf einer Kreislinie um die Drehachse 32 liegt. In radialer Richtung weisen sie jeweils eine Erstreckung auf, die dem Durchmesser der Ein-/Auslassöffnung 22, 24, 26 entspricht. In Umfangsrichtung, die der Bewegungsrichtung der Absperrscheibe 30 beim Verdrehen um die Drehachse 32 entspricht, weist die dritte Durchtrittsöffnung 54 entlang ihrer Mittellinie eine Länge auf, die dem maximalen Abstand der Umfangsränder 56 der zweiten und dritten Ein-/Auslassöffnungen 24, 26 entspricht.

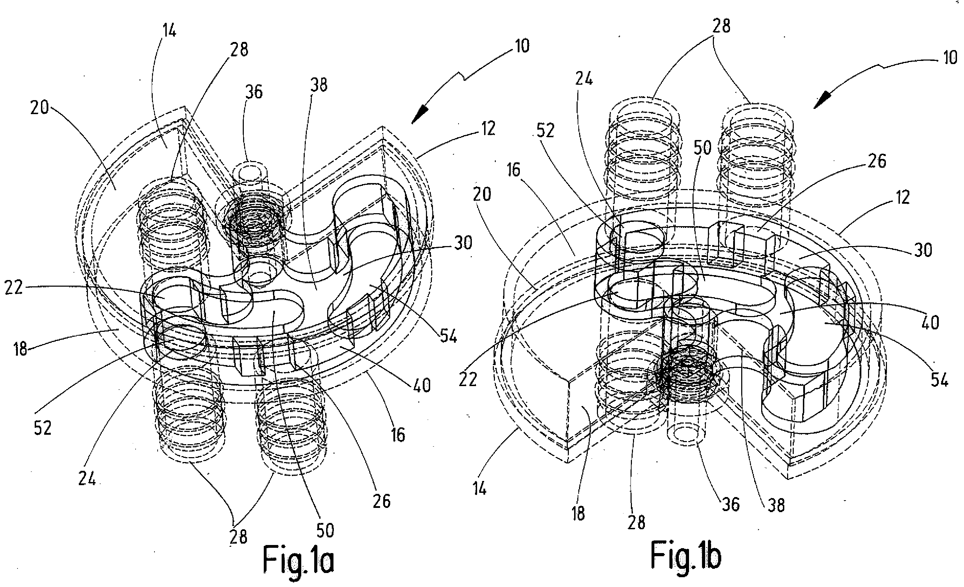

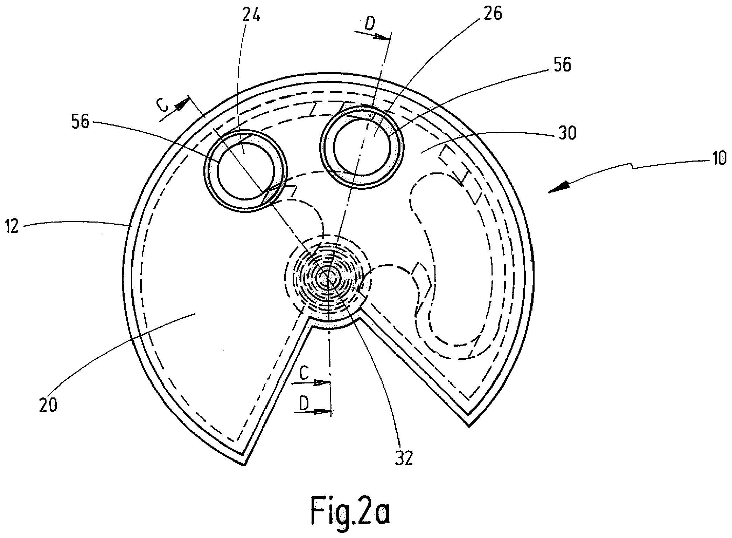

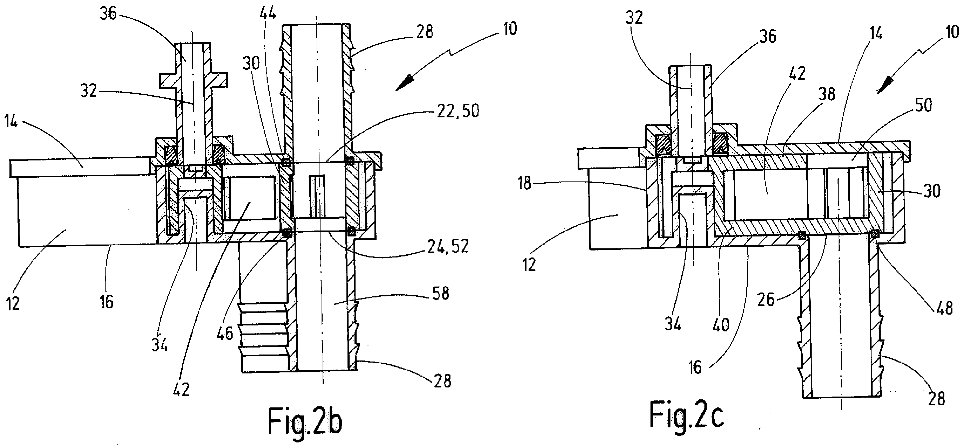

In Fig. 1a, 1b sowie in Fig. 2a, b, c ist eine erste Stellung der Absperrscheibe 30 gezeigt, bei der die erste Ein-/Auslassöffnung 22 mit der ersten Durchtrittsöffnung 50 kommuniziert, indem Letztere mit einem ihrer beiden Endbereiche unter Ersterer angeordnet ist. Desweiteren kommuniziert die zweite Durchtrittsöffnung 52 mit der zweiten Ein-/Auslassöffnung 24, indem sie direkt über dieser angeordnet ist. Wie in Fig. 2b gezeigt, ist somit ein gerader Durchgangskanal 58 für den Durchtritt von Flüssigkeit geöffnet. Bewegt man die Absperrscheibe 30 durch Verdrehen um die Drehachse 32 aus der eine Endstellung bildenden ersten Stellung heraus, so wird durch Wegbewegen der zweiten Durchtrittsöffnung 52 von der zweiten Ein-/Auslassöffnung 24 Letztere verschlossen, während die erste Ein-/Auslassöffnung 22 nach wie vor mit der länglich ausgebildeten ersten Durchtrittsöffnung 50 kommuniziert. Schließlich gelangt die dritte Durchtrittsöffnung 54 mit einem ihrer beiden Endbereiche über die dritte Ein-/Auslassöffnung 26, während die erste Durchtrittsöffnung 50 noch mit ihrem zweiten Endbereich unter der ersten Ein-/Auslassöffnung 22 liegt, so dass die Ventileinheit 10 für einen Durchtritt von Flüssigkeit von der ersten Ein-/Auslassöffnung 22 zur dritten Ein-/Auslassöffnung 26 offen ist. Zu diesem Zweck weist die erste Durchtrittsöffnung 50 entlang ihrer Mittellinie eine Länge auf, die dem Abstand der dritten Durchtrittsöffnung 54 von der von ihr am weitesten entfernten Stelle des Umfangsrands 56 der dritten Ein-/Auslassöffnung 26 in der ersten Stellung zuzüglich dem Durchmesser der ersten Ein-/Auslassöffnung 22 entspricht. Wird die Absperrscheibe 30 aus dieser zweiten Stellung weiter verdreht, so wird die erste Ein-/Auslassöffnung 22 schließlich durch die erste Platte 38 verschlossen, während die dritte Durchtrittsöffnung 54 mit ihrem einen Endbereich über der zweiten Ein-/Auslassöffnung 24 und mit ihrem anderen Endbereich über der dritten Ein-/Auslassöffnung 26 zu liegen kommt, so dass die Ventileinheit 10 für den Durchtritt von Flüssigkeit von der zweiten Ein-/Auslassöffnung 24 zur dritten Ein-/Auslassöffnung 26 geöffnet ist.

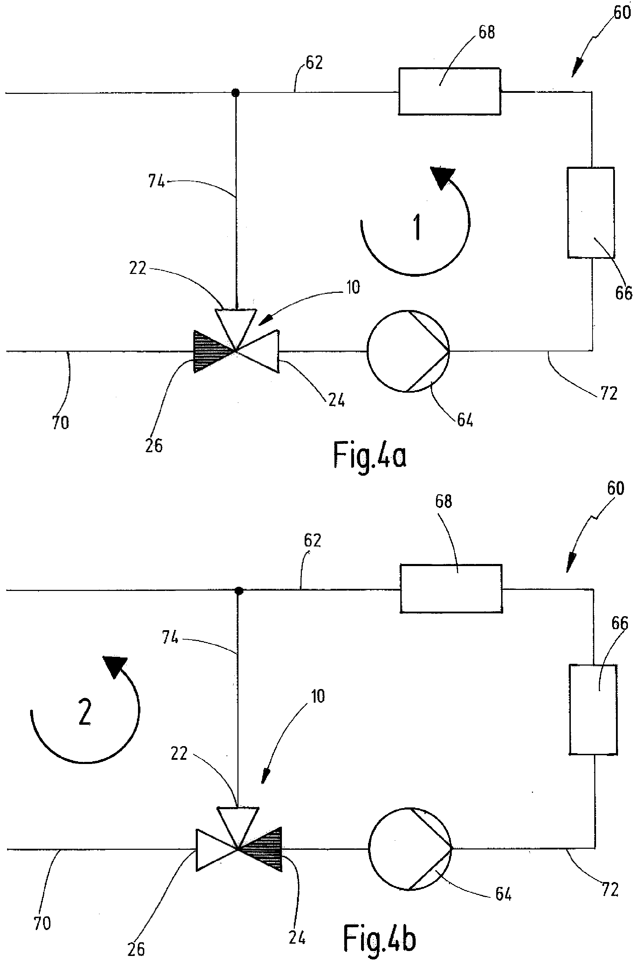

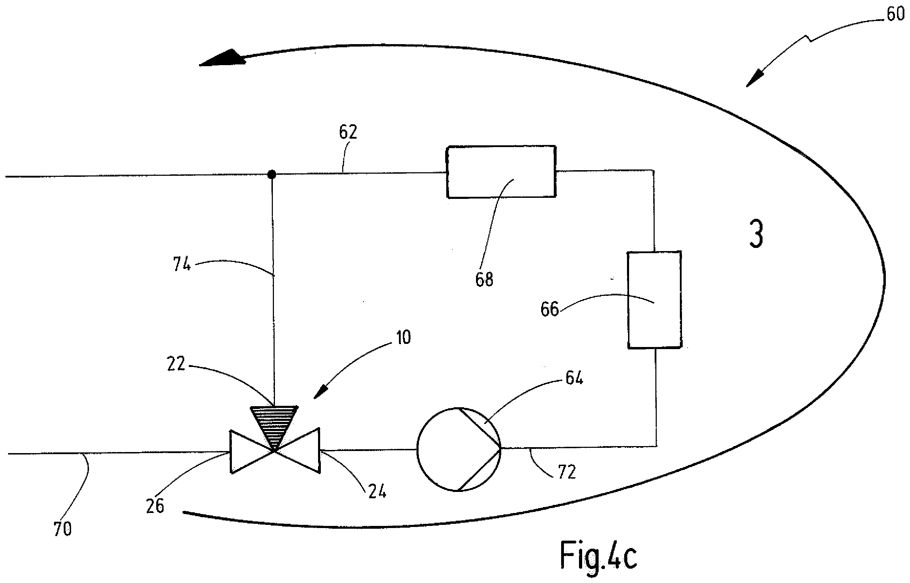

Fig. 4a, 4b, 4c zeigt ein Anwendungsbeispiel für die erfindungsgemäße Ventileinheit 10. Dort ist schematisch ein Kreislauf 60 für einen flüssigen Wärmeträger der Innenraumheizung eines Kraftfahrzeugs dargestellt, der eine von einem nicht gezeigten Verbrennungsmotor bzw. von einer durch die Abwärme des Motors beheizten Wärmequelle kommende und wieder zu diesem zurückführende Kühlwasserleitung 62 aufweist. Im Kreislauf 60 befinden sich eine Pumpe 64, eine Heizung 66 zum Erwärmen des Kühlwassers und ein Wärmetauscher 68, mit dem im Kühlwasser gespeicherte Wärme an den Innenraum des Kraftfahrzeugs abgegeben werden kann. Die Ventileinheit 10 ist an einer Verzweigung eingebaut, an der sich ein erster Leitungsabschnitt 70, der Kühlwasser vom Motor bzw. von der Wärmequelle antransportiert, in einen zweiten Leitungsabschnitt 72, in dem sich die Pumpe 64, die Heizung 66 und der Wärmetauscher 68 befinden, und einen Bypass 74 verzweigt, der unter Umgehung der Pumpe 64, der Heizung 66 und des Wärmetauschers 68 eine direkte Rückleitung zum Motor bzw. zur Wärmequelle darstellt. Dabei ist die erste Ein-/Auslassöffnung 22 an den Bypass 74, die zweite Ein-/Auslassöffnung 24 an den zweiten Leitungsabschnitt 72 und die dritte Ein-/Auslassöffnung 26 an den ersten Leitungsabschnitt 70 angeschlossen.

Bei der ersten Stellung der Absperrscheibe 30, in der sie die dritte Ein-/Auslassöffnung 26 verschließt, aber eine Verbindung zwischen der ersten Ein-/Auslassöffnung 22 und der zweiten Ein-/Auslassöffnung 24 herstellt (vgl. Fig. 2b, 2c), sorgt ein Betrieb der Pumpe 64 für ein Umwälzen des Kühlwassers vom zweiten Leitungsabschnitt 72 über den Bypass 74 zurück zum zweiten Leitungsabschnitt 72. In dieser Stellung der Absperrscheibe 30 wird die als Standheizung ausgebildete Heizung 66 zum Beheizen des Fahrzeuginnenraums bei kaltem Motor betrieben. Bei der zweiten Stellung der Absperrscheibe 30, in der diese den Durchgang zwischen der ersten und der dritten Ein-/Auslassöffnung 22, 26 freigibt, die zweite Ein-/Auslassöffnung 24 dagegen sperrt (Fig. 4b), wird der Kreislauf vom zweiten Leitungsabschnitt 72 über den Bypass 74 zurück zum zweiten Leitungsabschnitt 72 unterbunden. Diese Stellung der Absperrscheibe 30 wird bevorzugt, wenn der Motor läuft, aber noch kalt ist. Die Standheizung 66 ist dann ausgeschaltet, und ein Kreislauf des Kühlwassers findet allenfalls vom ersten Leitungsabschnitt 70 über den Bypass 74 zurück zum Motor bzw. zur Wärmequelle statt, wenn in diesem Bereich eine weitere Pumpe angeordnet ist. Bei warmem Motor schließlich ist der Durchgang von der zweiten Ein-/Auslassöffnung 24 zur dritten Ein-/Auslassöffnung 26 geöffnet, und die erste Ein-/Auslassöffnung 22 ist verschlossen (Fig. 4c). Die Standheizung 66 ist ausgeschaltet, und die Beheizung des Innenraums des Fahrzeugs erfolgt durch Abgabe von Wärme des aufgeheizten Kühlwassers über den Wärmetauscher 68 bei einem Kühlwasserkreislauf über den ersten und zweiten Leitungsabschnitt 70, 72 zurück zum Motor bzw. zur Wärmequelle bei gesperrtem Bypass 74.

Zusammenfassend ist folgendes festzuhalten: Die Erfindung betrifft eine Ventileinheit 10, insbesondere zur Verwendung in einem Kreislauf 60 für einen flüssigen Wärmeträger der Innenraumheizung eines Kraftfahrzeugs, mit einem Ventilgehäuse 12, das eine Deckenwand 14 und eine im Abstand zur Deckenwand 14 angeordnete Bodenwand 16 aufweist, wobei in der Deckenwand 14 eine erste Ein-/Auslassöffnung 22 angeordnet ist und wobei in der Bodenwand 16 eine zweite und eine dritte Ein-/Auslassöffnung 24, 26 angeordnet sind und wobei zwischen der Deckenwand 14 und der Bodenwand 16 eine zum Verschließen und Freigeben der Ein-/Auslassöffnungen 22, 24, 26 in und entgegen einer Bewegungsrichtung bewegliche Absperrscheibe 30 angeordnet ist. Erfindungsgemäß ist vorgesehen, dass die Absperrscheibe 30 eine erste Platte 38 aufweist, die an einem um die erste Ein-/Auslassöffnung 22 umlaufenden Dichtelement 44 anliegt, dass die Absperrscheibe 30 eine zweite Platte 40 aufweist, die im Abstand zur ersten Platte 38 angeordnet und starr mit ihr verbunden ist und die an einem um die zweite Ein-/Auslassöffnung 24 umlaufenden Dichtelement 46 und an einem um die dritte Ein-/Auslassöffnung 26 umlaufenden Dichtelement 48 anliegt, dass die erste Platte 38 mindestens eine erste Durchtrittsöffnung 50 aufweist, dass die zweite Platte 40 eine zweite und mindestens eine dritte Durchtrittsöffnung 52, 54 aufweist und dass die Durchtrittsöffnungen 50, 52, 54 in ihren Abmessungen so an die Ein-/Auslassöffnungen 22, 24, 26 angepasst sind, dass in einer ersten Stellung der Absperrscheibe 30 die erste Ein-/Auslassöffnung 22 mit der ersten Durchtrittsöffnung 50 oder einer der ersten Durchtroittsöffnungen und die zweite Ein-/Auslassöffnung 24 mit der zweiten Durchtrittsöffnung 52 kommuniziert, während die dritte Ein-/Auslassöffnung 26 gesperrt ist, dass in einer zweiten Stellung der Absperrscheibe 30 die erste Ein-/Auslassöffnung 22 mit der ersten Durchtrittsöffnung 50 oder einer weiteren der ersten Durchtrittsöffnungen und die dritte Ein-/Auslassöfifnung 26 mit der dritten Durchtrittsöffnung oder einer der dritten Durchtrittsöffnungen 54 kommmuniziert, während die zweite Ein-/Auslassöfifnung 24 gesperrt ist, und dass in einer dritten Stellung der Absperrscheibe 30 die zweite und die dritte Ein-/Auslassöfifnung 24, 26 mit der dritten Durchtrittsöffnung oder jeweils mit einer der dritten Durchtrittsöffnungen 54 kommunizieren, während die erste Ein-/Auslassöfifnung 22 gesperrt ist.

## Patentansprüche

1. Ventileinheit, insbesondere zur Verwendung in einem Kreislauf (60) für einen flüssigen Wärmeträger der Innenraumheizung eines Kraftfahrzeugs, mit einem Ventilgehäuse (12), das eine Deckenwand (14) und eine im Abstand zur Deckenwand (14) angeordnete Bodenwand (16) aufweist, wobei in der Deckenwand (14) eine erste Ein-/Auslassöffnung (22) angeordnet ist und wobei in der Bodenwand: (16) eine zweite und eine dritte Ein-/Auslassöffnung (24, 26) angeordnet sind und wobei zwischen der Deckenwand (14) und der Bodenwand (16) eine zum Verschließen und Freigeben der Ein-/Auslassöffnungen (22, 24, 26) in und entgegen einer Bewegungsrichtung bewegliche Absperrscheibe (30) angeordnet ist, wobei die Absperrscheibe (30) eine erste Platte (38) aufweist, die an einem um die erste Ein-/Auslassöffnung (22) umlaufenden Dichtelement (44) anliegt, die Absperrscheibe (30) eine zweite Platte (40) aufweist, die im Abstand zur ersten Platte (38) angeordnet und starr mit ihr verbunden ist und die an einem um die zweite Ein-/Auslassöffnung (24) umlaufenden Dichtelement (46) und an einem um die dritte Ein-/Auslassöffnung (26) umlaufenden Dichtelement (48) anliegt, die erste Platte (38) mindestens eine erste Durchtrittsöffnung (50) aufweist, die zweite Platte (40) eine zweite und mindestens eine dritte Durchtrittsöffnung (52, 54) aufweist, die Durchtrittsöffnungen (50, 52, 54) in ihren Abmessungen so an die Ein-/Auslassöffnungen (22, 24, 26) angepasst sind, dass in einer ersten Stellung der Absperrscheibe (30) die erste Ein-/Auslassöffnung (22) mit der ersten Durchtrittsöffnung (50) oder einer der ersten Durchtrittsöffnungen und die zweite Ein-/Auslassöffnung (24) mit der zweiten Durchtrittsöffnung (52) kommuniziert, und in einer dritten Stellung der Absperrscheibe (30) die zweite und die dritte Ein-/Auslassöffnung (24, 26) mit der dritten Durchtrittsöffnung (54) oder jeweils mit einer der dritten Durchtrittsöffnungen kommunizieren, während die erste Ein-/Auslassöffnung (22) gesperrt ist, **dadurch gekennzeichnet, dass** in der ersten,Stellung der Absperrscheibe die dritte Ein-/Auslassöffnung (26) gesperrt ist, dass in einer zweiten Stellung der Absperrscheibe (30) die erste Ein-/Auslassöffnung (22) mit der ersten Durchtrittsöffnung (50) oder einer weiteren der ersten Durchtrittsöffnungen und die dritte Ein-/Auslassöffnung (26) mit der dritten Durchtrittsöffnung (54) oder einer der dritten Durchlassöffnungen kommmuniziert, während die zweite Ein-/Auslassöffnung (24) gesperrt ist.

2. Ventileinheit nach Anspruch 1, **dadurch gekennzeichnet, dass** alle Ein-/Auslassöffnungen (22, 24, 26) gleich groß sind.

3. Ventileinheit nach Anspruch 1 oder 2, **dadurch gekennzeichnet, dass** die Ein-/Auslassöffnungen (22, 24, 26) jeweils kreisrund sind.

4. Ventileinheit nach einem der vorangehenden Ansprüche, **dadurch gekennzeichnet, dass** die zweite Ein-/Auslassöffnung (24) direkt unter der ersten Ein-/Auslassöffnung (22) angeordnet ist.

5. Ventileinheit nach einem der vorangehenden Ansprüche, **dadurch gekennzeichnet, dass** die Absperrscheibe (30) genau eine erste und/oder genau eine dritte Durchtrittsöffnung (50, 54) aufweist, welche in der Bewegungsrichtung jeweils eine größere Längserstreckung aufweisen als die zweite und die dritte Ein-/Auslassöffnung (24, 26).

6. Ventileinheit nach Anspruch 5, **dadurch gekennzeichnet, dass** die dritte Durchtrittsöffnung (54) in der Bewegungsrichtung eine Längserstreckung aufweist, die dem in der Bewegungsrichtung gemessenen maximalen Abstand der Umfangsränder (56) der zweiten und dritten Ein-/Auslassöffnung (24, 26) entspricht oder größer ist als diese.

7. Ventileinheit nach einem der vorangehenden Ansprüche, **dadurch gekennzeichnet, dass** die erste und die dritte Stellung der Absperrscheibe (30) Endstellungen sind, zwischen denen die Absperrscheibe (30) im Ventilgehäuse (12) hin- und herbeweglich ist

8. Ventileinheit nach einem der vorangehenden Ansprüche, **dadurch gekennzeichnet, dass** die Absperrscheibe (30) um eine zur ersten Platte (38) und zur zweiten Platte (40) senkrechte Drehachse (32) im Ventilgehäuse (12) verdrehbar ist.

9. Ventileinheit nach einem der vorangehenden Ansprüche, **dadurch gekennzeichnet, dass** das Ventilgehäuse (12) nach allen Seiten geschlossen ist.

10. Kreislaufsystem für eine flüssigen Wärmeträger mit einer Leitung (62) zum Ableiten des Wärmeträgers von einer Wärmequelle und zum Zurückleiten des Wärmeträgers zur Wärmequelle, mit mindestens einer an die Leitung (62) angeschlossenen Pumpe (64) zum Pumpen des Wärmeträgers, mit einem an die Leitung (62) angeschlossenen Wärmetauscher (68), mit einer Heizung (66) zum Heizen des Wärmeträgers, mit einem Bypass (74) zum Zurückleiten des Wärmeträgers zur Wärmequelle unter Umgehung des Wärmetauschers (68) und der Heizung (66) und mit einer Ventileinheit (10) nach einem der vorangehenden Ansprüche, wobei eine der Ein-/Auslassöffnungen (22, 24, 26) an einen von der Wärmequelle kommenden oder zur Wärmequelle führenden ersten Abschnitt (70) der Leitung (62) angeschlossen ist, wobei eine der Ein-/Auslassöffnungen (22, 24, 26) an einen vom Wärmetauscher (68) und der Heizung (66) kommenden oder zum Wärmetauscher (68) und der Heizung (66) führenden zweiten Abschnitt (72) der Leitung (62) angeschlossen ist und wobei eine der Ein-/Auslassöffnungen (22, 24, 26) an den Bypass (74) angeschlossen ist.

11. Kreislaufsystem nach Anspruch 10, **dadurch gekennzeichnet, dass** die Ventileinheit (10) in der ersten Stellung einen Durchfluss des Wärmeträgers zwischen dem Bypass (74) und dem zweiten Abschnitt (72) der Leitung (62) freigibt.

## Claims

1. A valve unit, in particular for use in a circuit (60) for a liquid heat carrier of the interior heating of a motor vehicle, having a valve housing (12), which has a top wall (14) and a bottom wall (16) arranged at a spacing from the top wall (14), wherein a first inlet/outlet opening (22) is arranged in the top wall (14) and wherein a second and a third inlet/outlet opening (24, 26) are arranged in the bottom wall (16) and wherein a shut-off disc (30), which may be moved in, and counter to, a movement direction for the purpose of closing and releasing the inlet/outlet openings (22, 24, 26), is arranged between the top wall (14) and the bottom wall (16),
wherein the shut-off disc (30) has a first plate (38) which abuts against a sealing element (44) circumferentially surrounding the first inlet/outlet opening (22), the shut-off disc (30) has a second plate (40), which is arranged at a spacing from the first plate (38) and is rigidly connected thereto and which abuts against a sealing element (46) circumferentially surrounding the second inlet/outlet opening (24) and against a sealing element (48) circumferentially surrounding the third inlet/outlet opening (26), the first plate (38) has at least one first opening (50), the second plate (40) has a second and at least one third opening (52, 54),
the openings (50, 52, 54) are adapted in terms of their dimensions to the inlet/outlet openings (22, 24, 26) such that, in a first position of the shut-off disc (30), the first inlet/outlet opening (22) communicates with the first opening (50) or one of the first openings and the second inlet/outlet opening (24) communicates with the second opening (52) and, in a third position of the shut-off disc (30), the second and the third inlet/outlet opening (24, 26) communicate with the third opening (54) or with one of the third openings in each case, whilst the first inlet/outlet opening (22) is blocked, **characterised in that**, in the first position of the shut-off disc, the third inlet/outlet opening (26) is blocked, **in that**, in a second position of the shut-off disc (30), the first inlet/outlet opening (22) communicates with the first opening (50) or a further one of the first openings and the third inlet/outlet opening (26) communicates with the third opening (54) or one of the third openings, whilst the second inlet/outlet opening (24) is blocked.

2. A valve unit according to claim 1, **characterised in that** all inlet/outlet openings (22, 24, 26) are the same size.

3. A valve unit according to claim 1 or 2, **characterised in that** the inlet/outlet openings (22, 24, 26) are each circular.

4. A valve unit according to one of the preceding claims, **characterised in that** the second inlet/outlet opening. (24) is arranged directly below the first inlet/outlet opening (22).

5. A valve unit according to one of the preceding claims, **characterised in that** the shut-off disc (30) has precisely one first and/or precisely one third opening (50, 54), which each have a greater longitudinal extent in the movement direction than the second and the third inlet/outlet opening (24, 26).

6. A valve unit according to claim 5, **characterised in that** the third opening (54) has a longitudinal extent in the movement direction which corresponds to, or is greater than, the maximum spacing between the circumferential edges (56) of the second and third inlet/outlet opening (24, 26) as measured in the movement direction.

7. A valve unit according to one of the preceding claims, **characterised in that** the first and the third position of the shut-off disc (30) are end positions between which the shut-off disc (30) may be moved back and forth in the valve housing (12).

8. A valve unit according to one of the preceding claims, **characterised in that** the shut-off disc (30) may be rotated in the valve housing (12) about an axis of rotation (32) which is perpendicular to the first plate (38) and to the second plate (40).

9. A valve unit according to one of the preceding claims, **characterised in that** the valve housing (12) is closed to all sides.

10. A circuit system for a liquid heat carrier having a line (62) for conveying the heat carrier away from a heat source and for conveying the heat carrier back to the heat source, having at least one pump (64) for pumping the heat carrier, which pump is connected to the line (62), having a heat exchanger (68) which is connected to the line (62), having a heater (66) for heating the heat carrier, having a bypass (74) for conveying the heat carrier back to the heat source, circumventing the heat exchanger (68) and the heater (66), and having a valve unit (10) according to one of the preceding claims, wherein one of the inlet/outlet openings (22, 24, 26) is connected to a first portion (70) of the line (62), which portion comes from the heat source or leads to the heat source, wherein one of the inlet/outlet openings (22, 24, 26) is connected to a second portion (72) of the line (62), which portion comes from the heat exchanger (68) and the heater (66) or leads to the heat exchanger (68) and the heater (66), and wherein one of the inlet/outlet openings (22, 24, 26) is connected to the bypass (74).

11. A circuit system according to claim 10, **characterised in that**, in the first position, the valve unit (10) releases a flow of the heat carrier between the bypass (74) and the second portion (72) of the line (62).

## Revendications

1. Unité de distribution destinée, en particulier, à l'utilisation dans un circuit (60) dédié à un agent caloporteur liquide du chauffage de l'habitacle d'un véhicule automobile, munie d'un carter de vanne (12) comportant une paroi de recouvrement (14) et une paroi de fond (16) située à distance de ladite paroi de recouvrement (14), sachant qu'un premier orifice (22) d'admission/de sortie est pratiqué dans ladite paroi de recouvrement (14), des deuxième et troisième orifices (24, 26) d'admission/de sortie étant pratiqués dans ladite paroi de fond (16), et sacliant qu'un obturateur discoïdal (30), mobile dans une direction de mouvement et dans le sens opposé en vue d'occulter et de dégager lesdits orifices (22, 24, 26) d'admission/de sortie, est interposé entre ladite paroi de recouvrement (14) et ladite paroi de fond (16), lequel obturateur discoïdal (30) comprend une première platine (38) en applique contre un élément d'étanchement (44) entourant la périphérie du premier orifice (22) d'admission/de sortie, ledit obturateur discoïdal (30) comprenant une seconde platine (40) qui est disposée à distance de ladite première platine (38), à laquelle elle est reliée rigidement, et est en applique contre un élément d'étanchement (46) ceinturant la périphérie du deuxième orifice (24) d'admission/de sortie, et contre un élément d'étanchement (48) cernant la périphérie du troisième orifice (26) d'admission/de sortie, ladite première platine (38) présentant au moins un premier orifice de passage (50), ladite seconde platine (40) étant pourvue d'un deuxième (52), et d'au moins un troisième orifice de passage (54), et sachant que les dimensions desdits orifices de passage (50, 52, 54) sont adaptées auxdits orifices (22, 24, 26) d'admission/de sortie de façon telle que, dans une première position de l'obturateur discoïdal (30), le premier orifice (22) d'admission/de sortie communique avec le premier orifice de passage (50) ou avec l'un des premiers orifices de passage, et le deuxième orifice (24) d'admission/de sortie communique avec le deuxième orifice de passage (52) ; et que, dans une troisième position dudit obturateur discoïdal (30), les deuxième et troisième orifices (24, 26) d'admission/de sortie communiquent avec le troisième orifice de passage (54), ou avec l'un respectif des troisièmes orifices de passage, tandis que le premier orifice (22) d'admission/de sortie est occulté, **caractérisée par le fait que** le troisième orifice (26) d'admission/de sortie est occulté dans la première position de l'obturateur discoïdal ; et **par le fait que**, dans une deuxième position dudit obturateur discoïdal (30), le premier orifice (22) d'admission/de sortie communique avec le premier orifice de passage (50) ou avec l'un supplémentaire, parmi les premiers orifices de passage, et le troisième orifice (26) d'admission/de sortie communique avec le troisième orifice de passage (54) ou avec l'un des troisièmes orifices de passage, tandis que le deuxième orifice (24) d'admission/de sortie est occulté.

2. Unité de distribution selon la revendication 1, **caractérisée par le fait que** tous les orifices (22, 24, 26) d'admission/de sortie sont de même dimensionnement.

3. Unité de distribution selon la revendication 1 ou 2, **caractérisée par le fait que** les orifices (22, 24, 26) d'admission/de sortie offrent respectivement une configuration circulaire.

4. Unité de distribution selon l'une des revendications précédentes, **caractérisée par le fait que** le deuxième orifice (24) d'admission/de sortie est placé directement au-dessous du premier orifice (22) d'admission/de sortie.

5. Unité de distribution selon l'une des revendications précédentes, **caractérisée par le fait que** l'obturateur discoïdal (30) comporte exactement un premier (50) et/ou exactement un troisième (54) orifice de passage présentant respectivement, dans la direction de mouvement, une plus grande étendue longitudinale que les deuxième et troisième orifices (24, 26) d'admission/de sortie.

6. Unité de distribution selon la revendication 5, **caractérisée par le fait que** le troisième orifice de passage (54) présente, dans la direction de mouvement, une étendue longitudinale qui correspond à la distance maximale mesurée dans ladite direction de mouvement et séparant les bords périphériques (56) des deuxième et troisième orifices (24, 26) d'admission/de sortie, ou excède ladite distance.

7. Unité de distribution selon l'une des revendications précédentes, **caractérisée par le fait que** les première et troisième positions de l'obturateur discoïdal (30) sont des positions extrêmes entre lesquelles ledit obturateur discoïdal (30) peut accomplir des va-et-vient dans le carter de vanne (12).

8. Unité de distribution selon l'une des revendications précédentes, **caractérisée par le fait que** l'obturateur discoïdal (30) peut tourner, dans le carter de vanne (12), autour d'un axe de rotation (32) perpendiculaire à la première platine (38) et à la seconde platine (40).

9. Unité de distribution selon l'une des revendications précédentes, **caractérisée par le fait que** le carter de vanne (12) est fermé de tous côtés.

10. Système de mise en circulation dévolu à un agent caloporteur liquide, comprenant un conduit (62) conçu pour évacuer l'agent caloporteur à partir d'une source de chaleur, et pour renvoyer ledit agent caloporteur vers ladite source de chaleur ; au moins une pompe (64), raccordée audit conduit (62) et affectée au pompage dudit agent caloporteur ; un échangeur thermique (68) raccordé audit conduit (62) ; un chauffage (66) conçu pour chauffer ledit agent caloporteur ; une dérivation (74) conçue pour renvoyer ledit agent caloporteur vers ladite source de chaleur, avec contournement dudit échangeur thermique (68) et dudit chauffage (66) ; et une unité de distribution (10) conforme à l'une des revendications précédentes, sachant que l'un des orifices (22, 24, 26) d'admission/de sortie est raccordé à un premier tronçon (70) du conduit (62) qui provient de la source de chaleur ou mène à ladite source de chaleur ; que l'un desdits orifices (22, 24, 26) d'admission/de sortie est raccordé à un second tronçon (72) dudit conduit (62) qui émane de l'échangeur thermique (68) et du chauffage (66), ou gagne ledit échangeur thermique (68) et ledit chauffage (66) ; et que l'un desdits orifices (22, 24, 26) d'admission/de sortie est raccordé à ladite dérivation (74).

11. Système de mise en circulation selon la revendication 10, **caractérisé par le fait que** l'unité de distribution (10) autorise, dans la première position, un écoulement de l'agent caloporteur entre la dérivation (74) et le second tronçon (72) du conduit (62).
